# EUROPÄISCHE PATENTANMELDUNG

(11) **EP 2 853 559 A1**
(43) Veröffentlichungstag der Anmeldung: **01.04.2015**
(21) Anmeldenummer: 13186355.7
(22) Anmeldetag: 27.09.2013
(51) Int. Cl.: C08K 5/50, C08K 3/04, C08L 69/00

(54) **Polycarbonatzusammensetzung mit verbesserten elektrischen Eigenschaften enthaltend Ruß**

(71) Anmelder: Bayer MaterialScience AG, 51373 Leverkusen (DE)
(72) Erfinder: Wehrmann, Rolf, 47800 Krefeld (DE); Heuer, Helmut Werner, 51371 Leverkussen (DE)
(74) Vertreter: BIP Patents

(57) **Zusammenfassung**

Die Erfindung betrifft eine Polycarbonat- oder Copolycarbonat-Zusammensetzung ((Co)polycarbonat-Zusammensetzung) mit verbesserten elektrischen Eigenschaften, speziell mit reduziertem Oberflächen- und Durchgangswiderstand, und daraus hergestellte Formkörper.

## Beschreibung

Die Erfindung betrifft eine Polycarbonat- oder Copolycarbonat-Zusammensetzung ((Co)polycarbonat-Zusammensetzung) mit verbesserten elektrischen Eigenschaften, speziell mit reduziertem Oberflächen- und Durchgangswiderstand, und daraus hergestellte Formkörper.

Die Erfindung betrifft insbesondere Zusammensetzungen aus Polycarbonat mit einem oder mehreren ionischen Flüssigkeiten und einem weiteren Stoff, der synergistisch zur Erhöhung der elektrischen Leitfähigkeit beiträgt, wobei das Polycarbonat aus Bisphenolen und organischen Carbonaten nach dem Umesterungsverfahren in der Schmelze, im folgenden "Schmelzepolycarbonat" genannt, oder aus Bisphenolen mit Phosgen nach dem Phasengrenzflächenverfahren, vorzugsweise in einem kontinuierlichen Phasengrenzflächenverfahren, sowie durch Compoundierung hergestellt wird.

Polycarbonat kann über verschiedene Prozesse hergestellt werden. Großtechnische Bedeutung erlangte zunächst das in Lösung über das Phasengrenzflächenverfahren aus Bisphenolen und Phosgen hergestellte Polycarbonat (LPC). Bei dem heute zunehmend an Bedeutung gewinnendem Umesterungs-Verfahren werden Bisphenole mit organischen Carbonaten in der Schmelze zu sogenanntem Schmelzepolycarbonat (SPC) umgesetzt.

(Co)polycarbonate werden desweiteren mittels Compoundierung hergestellt. Dazu werden üblicherweise auf einem Mehrwellenextruder Additive in entsprechende Polymerschmelzen eingearbeitet. Dieses Verfahren ist neben der Herstellung von opaken und transluzenten auch für transparente Zusammensetzungen geeignet.

Polycarbonat zeichnet sich neben seinen guten mechanischen Eigenschaften und thermischen Eigenschaften auch durch gute elektrische Eigenschaften aus. Allerdings besitzen (Co)Polycarbonate hohe Durchgangs- und Oberflächenwiderstände. Mit steigendem Oberflächen- und Durchgangswiderstand nimmt die Aufladbarkeit in isolierender Umgebung zu. Elektrische Ladungen werden schlecht abgeleitet. Bei sensiblen Anwendungen können geringe Spannungen zu irreversiblen Schädigungen elektrischer Bauteile führen. Weiterhin können sich elektrische Aufladungen durch Funkenüberschlag entladen, was besonders in explosionsgefährdeten Umgebungen zu vermeiden ist. Umgekehrt nimmt die Möglichkeit der elektrischen Aufladung ab, wenn der Oberflächenwiderstand kleiner wird.

Häufig werden daher Polymere mit hohen Anteilen an elektrisch leitenden Fremdstoffen wie Ruß, Graphit, Kohlefasern oder Metallpulver bzw. Metallteilchen additiviert. Dies führt aber in der Regel zu einer Verschlechterung anderer wichtiger Eigenschaften, wie beispielsweise reduzierten Schmelzestabilitäten, Polymerabbau, höheren Schmelzviskositäten und schlechteren mechanischen Eigenschaften, wie geringeren Zähigkeiten/höherer Sprödigkeit.

Es bestand daher Bedarf an geeigneten Polycarbonat-Formmassen die diese Nachteile nicht aufweisen, jedoch nach der Verarbeitung zu Formkörpern reduzierte Durchgangs- und Oberflächenwiderstände aufweisen.

Es wurde überraschend gefunden, dass die Kombination ionischer Flüssigkeiten mit Ruß in Polycarbonaten synergistisch zu einer Reduktion von Durchgangs- und Oberflächenwiderstand unter Beibehaltung der für die Verarbeitung im Spritzguss zwingend notwendigen hohen Schmelzestabilität führt.

In der Literatur sind ionische Flüssigkeiten als Additive zur Verbesserung der antistatischen Eigenschaften von Polymercompounds beschrieben.

Die DE 10 2008 049 787 A1 betrifft ein Verfahren zur Herstellung von Diphenylcarbonat unter Verwendung einer Katalysatorzusammensetzung umfassend ionische Flüssigkeiten.

In der Dissertation von W. Wiesenhöfer "Neue Methoden zur Anwendung von Lipasen in der organischen Synthese; Ruhr-Universität Bochum, 2004" wird u. a. die kinetische Racematspaltung in ionischen Flüssigkeiten beschrieben

Einen Überblick über ionische Flüssigkeiten liefert P. Wasserscheid, W. Keim, Angew. Chem. Int. Ed. 2000, 39, 3772.

Es ist bekannt, dass ionische Flüssigkeiten sehr effektiv Wärme aus einem Reaktionssystem ableiten können (US 2006/0251961 A1).

US 2010/0048829 A1 bezieht sich auf flüssige Zusammensetzungen, welche mindestens ein Polymer sowie eine ionische Flüssigkeit auf Stickstoffbasis (polyzyklische Amidin-Basen) zur verbesserten Solubilisierung enthalten.

Weiterhin sind ionische Flüssigkeiten für Anwendungen in Druck-sensitiven Klebstoffen (US 2005/266238 A1), in Display-Anwendungen (US 2007/040982A1) oder als Hilfstransportmittel in technischen Destillationen zur Auftrennung azeotroper oder engsiedender Gemische (WO 2005/016483 A1 beschrieben.

US 6,372,829 B1 beschreibt Zusammensetzungen aus mindestens einem nicht-polymeren Stickstoff-Oniumsalz welches ein fluororganisches Anion beinhaltet. Die Verwendung von Phosphor-haltigen Oniumsalzen wird nicht beschrieben.

JP 2005-015573 beschreibt ein antistatisches thermoplastisches Harz, welches eine ionische Flüssigkeit aufweist.

Es sind in der Literatur keine Anwendungen bzw. Kombinationen von ionischen Flüssigkeiten und Ruß mit (Co)polycarbonaten oder PC Blends beschrieben.

Gegenstand der Erfindung ist daher eine Zusammensetzung enthaltend
A) wenigstens ein aromatisches Polycarbonat oder Copolycarbonat;
B) 0,05 bis 10 Gew.% einer phosphor-haltigen ionischen Flüssigkeit der Formel (I) 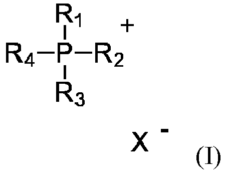 wobei R₁ bis R₄ jeweils unabhängig voneinander für einen Alkyl- oder Arylrest stehen und X⁻ für ein organisches oder anorganisches, ein- oder multivalentes Anion steht,
C) 0,05 bis 10 Gew.% Ruß; und
D) wenigstens einen Zusatzstoff;
wobei sich die Gew.%-Angaben jeweils auf das Gesamtgewicht der Komponenten A, B, C und D beziehen (d.h. die Summe der Komponenten A, B, C und D ergibt 100 Gew.-%).

### Komponente A

Komponente A ist ein Polycarbonat oder ein Copolycarbonat.

(Co)Polycarbonate im Sinne der vorliegenden Erfindung sind sowohl Homopolycarbonate als auch Copolycarbonate; die Polycarbonate können in bekannter Weise linear oder verzweigt sein.

Bevorzugte Herstellungsweisen der Polycarbonate, die in der erfindungsgemäßen Zusammensetzung bevorzugt eingesetzt werden, einschließlich der Polyestercarbonate, sind das bekannte Grenzflächenverfahren und das bekannte Schmelzeumesterungsverfahren.

Im ersten Fall dient als Kohlensäurederivat vorzugsweise Phosgen, im letzteren Fall vorzugsweise Diphenylcarbonat. Katalysatoren, Lösungsmittel, Aufarbeitung, Reaktionsbedingungen etc. für die Polycarbonatherstellung sind in beiden Fällen hinreichend beschrieben und bekannt.

Ein Teil, bis zu 80 Mol-%, vorzugsweise von 20 Mol-% bis zu 50 Mol-% der Carbonat-Gruppen in den erfindungsgemäß geeigneten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, sind, genau bezeichnet, aromatische Polyestercarbonate. Sie sollen der Einfachheit halber in vorliegender Anmeldung unter dem Oberbegriff der thermoplastischen, aromatischen Polycarbonate subsumiert werden.

Die Herstellung der Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Beispielhaft für die Herstellung von Polycarbonaten sei hier auf Schnell, "Chemistry and Physics of Polycarbonates", Polymer Reviews, Volume 9, Interscience Publishers, New York, London, Sydney 1964 verwiesen.

Die thermoplastischen Polycarbonate, die in der erfindungsgemäßen Zusammensetzung bevorzugt eingesetzt werden, einschließlich der thermoplastischen, aromatischen Polyestercarbonate haben ein mittleres Molekulargewicht M_{w} (ermittelt durch Messung der relativen Viskosität bei 25°C in CH₂Cl₂ und einer Konzentration von 0,5 g pro 100 ml CH₂Cl₂) von 12 000 bis 120 000 g/mol, vorzugsweise von 15 000 bis 80 000 g/mol und insbesondere von 15 000 bis 60 000 g/mol.

Für das erfindungsgemäße Verfahren geeignete Diphenole zur Herstellung von Polycarbonat sind im Stand der Technik vielfach beschrieben.

Geeignete Diphenole sind beispielsweise Hydrochinon, Resorcin, Dihydroxydiphenyl, Bis-(hydroxyphenyl)-alkane, Bis(hydroxy-phenyl)-cycloalkane, Bis-(hydroxyphenyl)-sulfide, Bis-(hydroxyphenyl)-**ether**, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan, 2,4-Bis-(4-hydroxy-phenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC), 1,1-Bis-(4-hydroxyphenyl)-cyclohexan (Bisphenol Z) und 1,1-Bis-(3-methyl-4-hydroxyphenyl)-cyclohexan (Dimethyl BPZ).

Besonders bevorzugte Diphenole sind 4,4'-Dihydroxydiphenyl, 1,1-Bis-(4-hydroxyphenyl)-phenyl-**ethan**, 2,2-Bis-(4-hydroxyphenyl)-propan, 2,2-Bis(3-dimethyl-4-hydroxyphenyl)-propan (Dimethyl-BPA), 1,1-Bis-(4-hydroxyphenyl)-cyclohexan 1,1-Bis-(3-methyl-4-hydroxyphenyl)-cyclohexan (Dimethyl BPZ) und 1,1-Bis-(4-hydroxyphenyl)-3,3,5-trimethylcyclohexan (Bisphenol TMC).

Diese und weitere geeignete Dihydroxyarylverbindungen sind z.B. in DE-A 3 832 396, FR-A 1 561 518, in H. Schnell, Chemistry and Physics of Polycarbonates, Interscience Publishers, New York 1964, S. 28 ff.; S.102 ff. und in D.G. Legrand, J.T. Bendler, Handbook of Polycarbonate Science and Technology, Marcel Dekker New York 2000, S. 72 ff. beschrieben.

Im Falle der Homopolycarbonate wird nur ein Diphenol eingesetzt, im Falle der Copolycarbonate werden mehrere Diphenole eingesetzt, wobei selbstverständlich die verwendeten Diphenole, wie auch alle anderen der Synthese zugesetzten Chemikalien und Hilfsstoffe mit den aus ihrer eigenen Synthese, Handhabung und Lagerung stammenden Verunreinigungen kontaminiert sein können, obwohl es wünschenswert ist, mit möglichst sauberen Rohstoffen zu arbeiten.

Die für die Umsetzung mit den Dihydroxyarylverbindungen geeigneten Diarylcarbonate bei der Schmelzeumesterung sind solche der allgemeinen Formel (II) 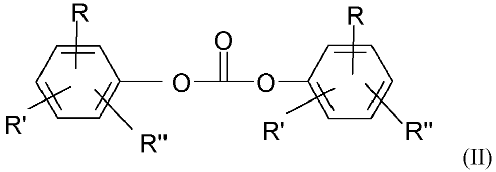 worin
- R, R' und R": jeweils unabhängig voneinander, gleich oder verschieden für Wasserstoff, lineares oder verzweigtes C₁-C₃₄-Alkyl, C₇-C₃₄-Alkylaryl oder C₆-C₃₄-Aryl stehen, R weiterhin auch -COO-R"' bedeuten kann, wobei R'" für Wasserstoff, lineares oder verzweigtes C₁-C₃₄-Alkyl, C₇-C₃₄-Alkylaryl oder C₆-C₃₄-Aryl steht.

Bevorzugte Diarylcarbonate sind beispielsweise Diphenylcarbonat, Di-(methylsalicylat)-carbonat, Di-(ethylsalicylat)-carbonat, Di-(n-propylsalicylat)-carbonat, Di-(iso-propylsalicylat)-carbonat, Di-(n-butylsalicylat)-carbonat, Di-(iso-butylsalicylat)-carbonat, Di-(tert-butylsalicylat)-carbonat, Di-(phenylsalicylat)-carbonat und Di-(benzylsalicylat)-carbonat.

Besonders bevorzugte Diarylverbindungen sind Diphenylcarbonat und Di-(methylsalicylat)-carbonat.

Ganz besonders bevorzugt ist Diphenylcarbonat (DPC).

Es können sowohl ein Diarylcarbonat als auch verschiedene Diarylcarbonate verwendet werden.

Die Diarylcarbonate können auch mit Restgehalten der Monohydroxyarylverbindungen, aus denen sie hergestellt wurden, eingesetzt werden. Die Restgehalte der Monohydroxyarylverbindungen können bis zu 20 Gew.-%, vorzugsweise bis zu 10 Gew.-%, besonders bevorzugt bis zu 5 Gew.-% und ganz besonders bevorzugt bis zu 2 Gew.-% betragen.

Bezogen auf die Dihydroxyarylverbindung(en) werden im Allgemeinen 1,02 bis 1,30 Mol des oder der Diarylcarbonat(e), bevorzugt 1,04 bis 1,25 Mol, besonders bevorzugt 1,045 bis 1,22 Mol, ganz besonders bevorzugt 1,05 bis 1,20 Mol pro Mol Dihydroxyarylverbindung eingesetzt. Es können auch Mischungen der oben genannten Diarylcarbonate eingesetzt werden, wobei die vorangehend aufgeführten Molangaben pro Mol Dihydroxyarylverbindung sich dann auf die Gesamtstoffmenge der Mischung der Diarylcarbonate beziehen.

In der gleichen Weise werden ggf. Verzweiger oder Verzweigermischungen der Synthese zugesetzt. Üblicherweise werden Verzweiger jedoch vor den Kettenabbrechern zugesetzt. In der Regel werden Trisphenole, Quarterphenole oder Säurechloride von Tri- oder Tetracarbonsäuren oder Gemische der Polyphenole oder der Säurechloride verwendet. Einige der als Verzweiger geeigneten Verbindungen mit drei oder mehr phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-(4,4-bis-(4-hydroxyphenyl)-cyclohexyl]-propan, 2,4-Bis-(4-hydroxyphenyl-isopropyl)-phenol und Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1 -Tri-(4-hydroxyphenyl)-ethan.

Als Katalysatoren können im Schmelzeumesterungsverfahren zur Herstellung von Polycarbonaten die in der Literatur bekannten basischen Katalysatoren wie beispielsweise Alkali- und Erdalkalihydroxyde und -oxyde und/oder Oniumsalze, wie z.B. Ammonium- oder Phosphoniumsalze, eingesetzt werden. Bevorzugt werden bei der Synthese Oniumsalze, besonders bevorzugt Phosphoniumsalze eingesetzt. Solche Phosphoniumsalze sind beispielsweise solche der allgemeinen Formel (III) 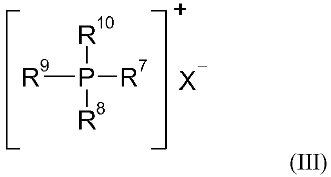 worin
- R⁷⁻¹⁰: für gleiche oder verschiedene gegebenenfalls substituierte C₁-C₁₀-Alkyl-, C₆-C₁₄-Aryl-, C₇-C₁₅-Arylalkyl- oder C₅-C₆-Cycloalkylreste, bevorzugt für Methyl oder C₆-C₁₄-Aryl, besonders bevorzugt Methyl oder Phenyl stehen und
- X⁻: für ein Anion ausgewählt aus der Gruppe Hydroxyd, Sulfat, Hydrogensulfat, Hydrogencarbonat, Carbonat, Halogenid, bevorzugt Chlorid, und Alkylat oder Arylat der Formel -OR¹¹ steht, wobei R¹¹ für einen gegebenenfalls substituierten C₆-C₁₄-Aryl-, C₇-C₁₅-Arylalkyl- oder C₅-C₆-Cycloalkylrest, C₁-C₂₀-Alkyl, bevorzugt Phenyl, steht.

Besonders bevorzugte Katalysatoren sind Tetraphenylphosphoniumchlorid, Tetraphenylphosphoniumhydroxid und Tetraphenylphosphoniumphenolat, ganz besonders bevorzugt ist Tetraphenylphosphoniumphenolat.

Die Katalysatoren werden bevorzugt in Mengen von 10⁻⁸ bis 10⁻³ mol, besonders bevorzugt in Mengen von 10⁻⁷ bis 10⁻⁴ mol, bezogen auf ein mol Dihydroxyarylverbindung, eingesetzt.

Es können gegebenenfalls auch Cokatalysatoren verwendet werden, um die Geschwindigkeit der Polykondensation zu erhöhen.

Dies können beispielsweise alkalisch wirkende Salze von Alkalimetallen und Erdalkalimetallen, wie Hydroxide, gegebenenfalls substituierte C₁-C₁₀-Alkoxide und C₆-C₁₄-Aryloxide von Lithium, Natrium und Kalium, vorzugsweise Hydroxide, gegebenenfalls substituierte C₁-C₁₀-Alkoxide oder C₆-C₁₄-Aryloxide von Natrium sein. Bevorzugt sind Natriumhydroxid, Natriumphenolat oder das Dinatriumsalz des 2,2-Bis-(4-hydroxyphenyl)-propans.

Falls Alkali- oder Erdalkalimetallionen in Form ihrer Salze zugeführt werden, beträgt die Menge an Alkali- oder Erdalkaliionen, bestimmt z.B. durch Atomabsorptionspektroskopie, 1 bis 500 ppb, vorzugsweise 5 bis 300 ppb und am meisten bevorzugt 5 bis 200 ppb, bezogen auf zu bildendes Polycarbonat. In bevorzugten Ausführungsformen des erfindungsgemäßen Verfahrens werden allerdings keine Alkalisalze verwendet.

Die Durchführung der Polycarbonatsynthese kann kontinuierlich oder diskontinuierlich geschehen. Die Reaktion kann daher in Rührkesseln, Rohrreaktoren, Umpumpreaktoren oder Rührkesselkaskaden oder Kombinationen daraus erfolgen. Dabei ist durch Verwendung der bereits erwähnten Mischorgane sicherzustellen, dass wässrige und organische Phase sich möglichst erst dann entmischen, wenn das Synthesegemisch ausreagiert hat, d.h. kein verseifbares Chlor von Phosgen oder Chlorkohlensäureestern mehr enthält.

Nach Eintrag des Phosgens im Grenzflächenverfahren kann es vorteilhaft sein, eine gewisse Zeit die organische Phase und die wässrige Phase zu durchmischen, bevor gegebenenfalls Verzweiger, sofern dieser nicht gemeinsam mit dem Bisphenolat dosiert wird, Kettenabbrecher und Katalysator zugegeben werden. Eine derartige Nachreaktionszeit kann nach jeder Dosierung von Vorteil sein. Diese Nachrührzeiten liegen bei 10 Sekunden bis 60 Minuten, bevorzugt 30 Sekunden bis 40 Minuten, besonders bevorzugt 1 bis 15 Minuten.

Die organische Phase kann aus einem Lösungsmittel oder Mischungen mehrerer Lösungsmittel bestehen. Geeignete Lösungsmittel sind chlorierte Kohlenwasserstoffe (aliphatische und / oder aromatische), bevorzugt Dichlormethan, Trichlorethylen, 1,1,1-Trichlorethan, 1,1,2- Trichlorethan und Chlorbenzol und deren Gemische. Es können jedoch auch aromatische Kohlenwasserstoffe wie Benzol, Toluol, m/p/o-Xylol oder aromatische Ether wie Anisol allein, im Gemisch mit oder zusätzlich zu chlorierten Kohlenwasserstoffen verwendet werden. Eine andere Ausführungsform der Synthese verwendet Lösungsmittel, welche Polycarbonat nicht lösen, sondern nur anquellen. Es können daher auch Nichtlösungsmittel für Polycarbonat in Kombination mit Lösungsmitteln verwendet werden. Dabei können als Lösungsmittel auch in der wässrigen Phase lösliche Lösungsmittel wie Tetrahydrofuran, 1,3/1,4-Dioxan oder 1,3-Dioxolan verwendet werden, wenn der Lösungsmittelpartner die zweite organische Phase bildet.

Die zur Regelung des Molekulargewichtes benötigten monofunktionellen Kettenabbrecher, wie beispielsweise Phenol oder Alkylphenole, insbesondere Phenol, p-tert. Butylphenol, isoOctylphenol, Cumylphenol, deren Chlorkohlensäureester oder Säurechloride von Monocarbonsäuren bzw. Gemischen aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind bzw., im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wo kein Phosgen mehr vorliegt, aber der Katalysator noch nicht dosiert wurde. Alternativ können sie auch vor dem Katalysator, mit dem Katalysator zusammen oder parallel zudosiert werden.

Die in der Phasengrenzflächensynthese von Polycarbonat bevorzugt verwendeten Katalysatoren sind tertiäre Amine, insbesondere Triethylamin, Tributylamin, Trioctylamin, N-Ethylpiperidin, N-Methylpiperidin, N-i/n-Propylpiperidin, quartäre Ammoniumsalze wie Tetrabutylammonium-, Tributylbenzylammonium-, Tetraethylammonium-hydroxid, -chlorid, -bromid, -hydrogensulfat, - tetrafluoroborat, sowie die den Ammoniumverbindungen entsprechenden Phosphoniumverbindungen. Diese Verbindungen sind als typische Phasengrenzflächenkatalysatoren in der Literatur beschrieben, kommerziell erhältlich und dem Fachmann geläufig. Die Katalysatoren können einzeln, im Gemisch oder auch neben- und nacheinander der Synthese zugesetzt werden, gegebenenfalls auch vor der Phosgenierung, bevorzugt sind jedoch Dosierungen nach der Phosgeneintragung, es sei denn, es werden eine Oniumverbindung oder ein Gemisch aus Oniumverbindungen als Katalysatoren verwendet. In diesem Fall ist eine Zugabe vor der Phosgendosierung bevorzugt. Die Dosierung des Katalysators oder der Katalysatoren kann in Substanz, in einem inerten Lösungsmittel, vorzugsweise dem Lösungsmittel der Polycarbonatsynthese oder auch als wässrige Lösung, im Falle der tert. Amine dann als deren Ammoniumsalze mit Säuren, bevorzugt Mineralsäuren, insbesondere Salzsäure, erfolgen. Bei Verwendung mehrerer Katalysatoren oder der Dosierung von Teilmengen der Katalysatorgesamtmenge können natürlich auch unterschiedliche Dosierungsweisen an verschiedenen Orten oder zu verschiedenen Zeiten vorgenommen werden. Die Gesamtmenge der verwendeten Katalysatoren liegt bei 0,001 bis 10 Mol-% bezogen auf Mole eingesetzte Bisphenole, bevorzugt 0,01 bis 8 Mol-%, besonders bevorzugt 0,05 bis 5 Mol-%.

Das ausreagierte, höchstens noch Spuren (< 2 ppm) an Chlorkohlensäureestern enthaltende mindestens zweiphasige Reaktionsgemisch lässt man zur Phasentrennung absitzen. Die wässrige alkalische Phase wird evtl. ganz oder teilweise zurück in die Polycarbonatsynthese als wässrige Phase geleitet oder aber der Abwasseraufarbeitung zugeführt, wo Lösungsmittel- und Katalysatoranteile abgetrennt und rückgeführt werden. In einer anderen Variante der Aufarbeitung wird nach Abtrennung der organischen Verunreinigungen, insbesondere von Lösungsmitteln und Polymerresten, und gegebenenfalls nach der Einstellung eines bestimmten pH-Wertes, z.B. durch Natronlaugezugabe, das Salz abgetrennt, welches z.B. der Chloralkalielektrolyse zugeführt werden kann, während die wässrige Phase gegebenenfalls wieder der Synthese zugeführt wird.

Die organische, das Polycarbonat enthaltende Phase kann nun von allen Kontaminationen alkalischer, ionischer oder katalytischer Art gereinigt werden. Die organische Phase enthält auch nach einem oder mehreren Absetzvorgängen noch Anteile der wässrigen alkalischen Phase in feinen Tröpfchen sowie den Katalysator, in der Regel ein *tert.* Amin. Die Absetzvorgänge können gegebenenfalls dadurch unterstützt werden, dass die organische Phase Absetzkessel, Rührkessel, Coalescer oder Separatoren bzw. Kombinationen daraus durchläuft, wobei gegebenenfalls Wasser in jedem oder einigen Trennschritten unter Umständen unter Verwendung von aktiven oder passiven Mischorganen zudosiert werden kann.

Nach dieser groben Abtrennung der alkalischen, wässrigen Phase wird die organische Phase ein oder mehrmals mit verdünnten Säuren, Mineral-, Carbon- Hydroxycarbon-und / oder Sulfonsäuren gewaschen. Bevorzugt sind wässrige Mineralsäuren insbesondere Salzsäure, phosphorige Säure und Phosphorsäure oder Mischungen dieser Säuren. Die Konzentration dieser Säuren sollte im Bereich 0,001 bis 50 Gew.-%, bevorzugt 0,01 bis 5 Gew.-% liegen.

Weiterhin wird die organische Phase mit entsalztem oder destilliertem Wasser wiederholt gewaschen. Die Abtrennung der, gegebenenfalls mit Teilen der wässrigen Phase dispergierten, organischen Phase nach den einzelnen Waschschritten geschieht mittels Absetzkessel, Rührkessel, Coalescer oder Separatoren bzw. Kombinationen daraus, wobei das Waschwasser zwischen den Waschschritten gegebenenfalls unter Verwendung von aktiven oder passiven Mischorganen zudosiert werden kann.

Zwischen diesen Waschschritten oder auch nach der Wäsche können ggf. Säuren, vorzugsweise gelöst im Lösungsmittel, welches der Polymerlösung zugrunde liegt, zugegeben werden. Bevorzugt werden hier Chlorwasserstoffgas und Phosphorsäure oder phosphorige Säure verwendet, die ggf. auch als Mischungen eingesetzt werden können.

**C₁-C₄-Alkyl** steht im Rahmen der Erfindung beispielsweise für Methyl, Ethyl, n-Propyl, iso-Propyl, n-Butyl, sec.-Butyl, tert.-Butyl, **C₁-C₆-Alkyl** darüber hinaus beispielsweise für n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1, 2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, **C₁-C₁₀-Alkyl** darüber hinaus beispielsweise für n-Heptyl und n-Octyl, Pinakyl, Adamantyl, die isomeren Menthyle, n-Nonyl, n-Decyl, **C₁-C₃₄-Alkyl** darüber hinaus beispielsweise für n-Dodecyl, n-Tridecyl, n-Tetradecyl, n-Hexadecyl oder n-Octadecyl. Gleiches gilt für den entsprechenden Alkylrest beispielsweise in Aralkyl- bzw. Alkylaryl-, Alkylphenyl- oder Alkylcarbonylresten. Alkylenreste in den entsprechenden Hydroxyalkyl- oder Aralkyl- bzw. Alkylarylresten stehen beispielsweise für die den vorangehenden Alkylresten entsprechenden Alkylenreste.

**Aryl** steht für einen carbocyclischen aromatischen Rest mit 6 bis 34 Gerüstkohlenstoffatomen. Gleiches gilt für den aromatischen Teil eines Arylalkylrestes, auch Aralkylrest genannt, sowie für Arylbestandteile komplexerer Gruppen, wie z.B. Arylcarbonylresten.

Beispiele für **C₆-C₃₄-Aryl** sind Phenyl, o-, p-, m-Tolyl, Naphthyl, Phenanthrenyl, Anthracenyl oder Fluorenyl.

**Arylalkyl** bzw. **Aralkyl** bedeutet jeweils unabhängig einen geradkettigen, cyclischen, verzweigten oder unverzweigten Alkyl-Rest nach vorstehender Definition, der einfach, mehrfach oder vollständig durch Aryl-Reste gemäß vorstehender Definition substituiert sein kann.

Die vorangehenden Aufzählungen sind beispielhaft und nicht als Limitierung zu verstehen.

Im Rahmen der vorliegenden Erfindung sind unter ppb und ppm - soweit nichts anderes angegeben - Gewichtsteile zu verstehen.

Das erfindungsgemäße eingesetzte Polycarbonat kann ein durch Gelpermeationschromatographie bestimmtes Mittel des Molekulargewichts von 5.000 bis 80.000 g/mol, vorzugsweise 10.000 bis 60.000 g/mol und in am meisten bevorzugter Weise 15.000 bis 40.000 g/mol aufweisen.

### Komponente B

Komponente B ist eine ionische Flüssigkeit auf Phosphor-Basis.

Erfindungsgemäß verwendete ionische Flüssigkeiten sind Verbindungen der allgemeinen Formel (I), die bevorzugt in einer Konzentration von 0,05 bis 10 Gew.%, besonders bevorzugt von 0,1 bis 8 Gew.%, ganz besonders bevorzugt 0,15 bis 7 Gew.%, und insbesondere 0,15 bis 6 Gew.% (bezogen auf das Gesamtgewicht der Komponenten A, B, C und D) in der Zusammensetzung enthalten sind, 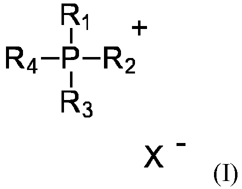 wobei R₁ bis R₄ jeweils unabhängig voneinander für einen Alkyl- oder Arylrest stehen und X⁻ für ein organisches oder anorganisches, ein- oder multivalentes Anion steht.

Ionische Flüssigkeiten enthalten bevorzugt ausschließlich Ionen. Es handelt sich somit um flüssige Salze, ohne dass das Salz dabei in einem Lösungsmittel wie Wasser gelöst ist. Bevorzugt versteht man unter ionischen Flüssigkeiten Salze, die bei Temperaturen unter 100° C, besonders bevorzugt unter 70°C, insbesondere unter 50°C, ganz besonders bevorzugt unter 30°C und insbesondere unter 20°C flüssig sind.

Besonders bevorzugt stehen R₁ bis R₄ jeweils unabhängig voneinander für einen vorzugsweise unverzweigten C₁-C₁₈-Alkylrest.

X⁻ steht für ein organisches oder anorganisches, ein- oder multivalentes Anion, bevorzugt ist das Anion mono, di, tri oder tetravalent, beispielsweise ist das Anion ausgewählt aus der Gruppe der Halogenide, Carboxylate, Phosphate Bis(perfluoralkylsulfonyl)amide bzw. -imide wie z.B. Bis(trifluormethylylsulfonyl)imid, Alkyl- und Aryltosylate, Perfluoralkyltosylate, Nitrat, Sulfat, Hydrogensulfat, Alkyl- und Arylsulfate, Polyethersulfate und -sulfonate, Perfluoralkylsulfate, Sulfonat, Alkyl- und Arylsulfonate, perfluorierte Alkyl- und Arylsulfonate, Alkyl- und Arylcarboxylate, Perfluoralkylcarboxylate, Perchlorat, Tetrarchloroaluminat und Saccharinat. Weiterhin sind Dicyanamid, Thiocyanat, Isothiocyanat, Tetraphenylborat, Tetrakis(pentafluorphenyl)borat, Tetrafluoroborat, Hexafluorophosphat, Polyetherphosphate und Phosphat bevorzugte Anionen.

Bevorzugt steht X- für ein Anion ausgewählt aus F⁻, Cl⁻, Br⁻, I⁻, PF₆, CF₃SO₃⁻, (CF₃SO₃)₂N⁻, CF₃CO₂⁻, CCl₃CO₂⁻, CN⁻, SCN⁻, OCN⁻; SO₄²⁻, HSO₄⁻, SO₃²⁻, HSO₃⁻, R^{a}OSO₃⁻, R^{a}SO₃⁻; PO₄³⁻, HPO₄²⁻, H₂PO₄⁻, R^{a}PO₄²⁻, HR^{a}PO₄⁻, R^{a}R^{b}PO₄⁻, R^{a}HPO₃⁻, R^{a}R^{b}PO₂⁻, R^{a}R^{b}PO₃⁻, PO₃³⁻, HPO₃²⁻, H₂PO₃⁻, R^{a}PO₃²⁻, R^{a}HPO₃⁻, R^{a}R^{b}PO₃⁻; R^{a}R^{b}PO₂⁻, R^{a}HPO₂⁻, R^{a}R^{b}PO⁻, R^{a}HPO⁻; R^{a}COO⁻, Saccarinate (Salze des o-Benzoesäuresulfinids), Anionen, welche sich von den Hydrocarbonsäuren oder Zuckersäuren ableiten, BO₃³⁻, HBO₃²⁻, H₂BO₃⁻, R^{a}R^{b}BO₃⁻, R^{a}HB0₃⁻, R^{a}BO₃²⁻, B(OR^{a})(OR^{b})(OR^{c})(OR^{d})⁻, B(HSO₄)⁻, B(R^{a}SO₄)⁻; R^{a}BO₂²⁻, R^{a}R^{b}BO⁻, HCO₃⁻, CO₃²⁻, R^{a}CO₃⁻, SiO₄⁴⁻, HSiO₄³⁻, H₂SiO₄²⁻, H₃SiO₄⁻, R^{a}SiO₄³⁻, R^{a}R^{b}SiO₄²⁻, R^{a}R^{b}R^{c}SiO₄⁻, HR^{a}SiO₄²⁻, H₂R^{a}SiO₄⁻, HR^{a}R^{b}SiO₄⁻; R^{a}SiO₃³⁻, R^{a}R^{b}SiO₂²⁻, R^{a}R^{b}R^{c}SiO₃⁻, R^{a}R^{b}R^{c}SiO₃⁻-, R^{a}R^{b}R^{c}SiO₂⁻, R^{a}R^{b}SiO₃²⁻; S²⁻, HS- und [R^{a}S]⁻,
wobei R^{a}, R^{b}, R^{c} oder R^{d} unabhängig voneinander für einen substituierten Alkyl- oder Arylrest stehen.

**Alkyl** steht für einen geradkettigen, cyclischen, verzweigten oder unverzweigten Alkyl-Rest, wobei die genannten Reste gegebenenfalls weiter substituiert sein können.

**C₁-C₆-Alkyl** steht beispielsweise für Methyl, Ethyl, n-Propyl, iso-Propyl, n-Butyl, sec.-Butyl, tert.-Butyl, n-Pentyl, 1-Methylbutyl, 2-Methylbutyl, 3-Methylbutyl, neo-Pentyl, 1-Ethylpropyl, Cyclohexyl, Cyclopentyl, n-Hexyl, 1,1-Dimethylpropyl, 1,2-Dimethylpropyl, 1,2-Dimethylpropyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl oder 1-Ethyl-2-methylpropyl, **C₁-C₁₈-Alkyl** darüber hinaus beispielsweise für n-Heptyl und n-Octyl, Pinakyl, Adamantyl, die isomeren Menthyle, n-Nonyl, n-Decyl, n-Dodecyl, n-Tridecyl, n-Tetradecyl, n-Hexadecyl, n-Octadecyl oder Stearyl.

**Aryl** steht jeweils unabhängig für einen aromatischen Rest mit 4 bis 24 Gerüstkohlenstoffatomen, in denen keines, ein, zwei oder drei Gerüstkohlenstoffatome pro Zyklus, im gesamten Molekül mindestens jedoch ein Gerüstkohlenstoffatom, durch Heteroatome, ausgewählt aus der Gruppe Stickstoff, Schwefel oder Sauerstoff, substituiert sein können, vorzugsweise jedoch für einen carbozyklischen aromatischen Rest mit 6 bis 24 Gerüstkohlenstoffatomen.

Beispiele für **C₆-C₂₄-Aryl** sind Phenyl, o-, p-, m-Tolyl, Naphthyl, Phenanthrenyl, Anthracenyl oder Fluorenyl, Beispiele für heteroaromatisches **C₄-C₂₄-Aryl** in denen keines, ein, zwei oder drei Gerüstkohlenstoffatome pro Zyklus, im gesamten Molekül mindestens **jedoch ein** Gerüstkohlenstoffatom, durch Heteroatome, ausgewählt aus der Gruppe Stickstoff, Schwefel oder Sauerstoff, substituiert sein können, sind beispielsweise Pyridyl, Pyridyl-N-Oxid, Pyrimidyl, Pyridazinyl, Pyrazinyl, Thienyl, Furyl, Pyrrolyl, Pyrazolyl, Imidazolyl, Thiazolyl, Oxazolyl oder Isoxazolyl, Indolizinyl, Indolyl, Benzo[b]thienyl, Benzo[b]furyl, Indazolyl, Chinolyl, Isochinolyl, Naphthyridinyl, Chinazolinyl, Benzofuranyl oder Dibenzofuranyl.

Beispiele für Phosphonium-basierte ionische Flüssigkeiten sind Ethyltributylphosphonium diethyl phosphate, Tetrabutylphosphonium bromide, Tetrabutylphosphonium chloride, Tetraoctylphosphonium bromide, Tributylmethylphosphonium methylsulfate, Tributyltetradecylphosphonium chloride, Tributyltetradecylphosphonium dodecylbenzenesulfonate, Trihexyltetradecylphosphonium bis(2,4,4-Trimethylpentyl)phosphinate, Trihexyltetradecylphosphonium bromide, Trihexyltetradecylphosphonium chloride, Trihexyltetradecylphosphonium decanoate, Trihexyltetradecylphosphonium dicyanamide und IL-AP3^{®} der Fa. Koei Chemical Company Ltd. Besonders bevorzugt ist IL-AP3^{®}.

In einer bevorzugten Ausführungsform können auch eine Mischung aus mehreren ionischen Flüssigkeiten verwendet werden, oder auch eine ionische Flüssigkeit alleine.

### Komponente C

Geeignete Rußtypen (Komponente C) werden in Ullmann's Encyclopedia of Industrial Chemistry, Kapitel 6. Carbon black, Wiley-VCH, 7.Auflage 2010 beschrieben.

Erfindungsgemäß einsetzbare Ruße können nach dem Furnacerußverfahren, dem Gasrußverfahren oder dem Flammrußverfahren hergestellt werden, vorzugsweise nach dem Furnacerußverfahren. Die Primärteilchengröße liegt zwischen 10 und 100 nm, vorzugsweise zwischen 20 und 60 nm, die Kornverteilung kann eng oder breit sein. Die BET-Oberfläche nach DIN 53601 liegt vorzugsweise zwischen 10 und 600 m²/g, besonders bevorzugt zwischen 70 und 400 m²/g. Die Rußpartikel können zur Einstellung von Oberflächenfunktionalitäten oxidativ nachbehandelt sein. Sie können hydrophob (beispielsweise Black Pearls 800 der Firma Cabot oder Printex 85 oder Flammruß 101 der Firma Evonik Degussa GmbH) oder hydrophil (beispielsweise Farbruß FW20 oder Printex 150 T der Firma Evonik Degussa GmbH) eingestellt sein. Sie können hochstrukturiert oder niederstrukturiert sein; damit wird ein Aggregationsgrad der Primärteilchen beschrieben.

Vorzugsweise weist die erfindungsgemäße Zusammensetzung den Ruß in einer Konzentration von 0,1 bis 10 Gew.%, besonders bevorzugt von 0,5 bis 8 Gew.%, ganz besonders bevorzugt von 0,75 bis 6 Gew.%, und insbesondere bevorzugt von 1 bis 5 Gew.% (bezogen auf das Gesamtgewicht der Komponenten A, B, C und D) auf.

### Komponente D

Gegenstand der vorliegenden Erfindung sind Zusammensetzungen enthaltend die Komponenten A, B und C und mindestens einen Zusatzstoff (Komponente D), vorzugsweise ausgewählt aus der Gruppe der für diese Thermoplasten üblichen Zusatzstoffe, wie Füllstoffe, UV-Stabilisatoren, IR-Stabilisatoren, Thermostabilisatoren, Antistatika und Pigmente, Farbmittel in den üblichen Mengen; gegebenenfalls können das Entformungsverhalten, das Fließverhalten, und/oder die Flammwidrigkeit noch durch Zusatz externer Entformungsmittel, Fließmittel, und/oder Flammschutzmittel, wie Sulfonsäuresalze, PTFE-Polymere bzw. PTFE-Copolymere, bromierte Oligocarbonate, oder Oligophosphate sowie Phosphazene verbessert werden (z. B. Alkyl- und Arylphosphite, -phosphate, -phosphane, niedermolekulare Carbonsäureester, Halogenverbindungen, Salze, Kreide, Quarzmehl, Glas- und Kohlenstofffasern, Pigmente und deren Kombination. Solche Verbindungen werden z. B. in WO 99/55772, S. 15 - 25, und in "Plastics Additives", R. Gächter und H. Müller, Hanser Publishers 1983, beschrieben).

Die Zusammensetzung enthält vorzugsweise 0,001 bis 5 Gew.-%, besonders bevorzugt 0,001 bis 2,5 Gew.-%, ganz besonders bevorzugt 0,005 bis 1,6 Gew.-%, insbesondere bevorzugt 0,01 bis 1,0 Gew.-%, und insbesondere ganz besonders bevorzugt 0,02 bis 0,8 Gew.-% (bezogen auf die Gesamtzusammensetzung) Zusatzstoffe.

Die den erfindungsgemäßen Zusammensetzungen gegebenenfalls zugesetzten Entformungsmitttel sind bevorzugt ausgewählt aus der Gruppe bestehend aus Pentaerythrittetrastearat, Glycerinmonostearat und langkettigen Fettsäureestern, wie beispielsweise Stearylstearat und Propandiolstearat, sowie deren Mischungen. Die Entformungsmittel werden vorzugsweise eingesetzt in Mengen von 0,05 Gew.-% bis 2,00 Gew.-%, bevorzugt in Mengen von 0,1 Gew.-% bis 1,0 Gew.-%, besonders bevorzugt in Mengen von 0,15 Gew.-% bis 0,60 Gew.-% und ganz besonders bevorzugt in Mengen von 0,20 Gew.-% bis 0,50 Gew.-%, bezogen auf das Gesamtgewicht der Komponenten A, B, C und D.

Geeignete Zusatzstoffe sind beispielsweise beschrieben in "Additives for Plastics Handbook, John Murphy, Elsevier, Oxford 1999", im "Plastics Additives Handbook, Hans Zweifel, Hanser, München 2001".

Geeignete Antioxidantien bzw. Thermostabilisatoren sind beispielsweise:
Alkylierte Monophenole, Alkylthiomethylphenole, Hydrochinone und alkylierte Hydrochinone, Tocopherole, Hydroxylierte Thiodiphenylether, Alkylidenbisphenole, O-, N- und S-Benzylverbindungen, Hydroxybenzylierte Malonate, Aromatische Hydroxybenzylverbindungen, Triazinverbindungen, Acylaminophenole, Ester von β-(3,5-Di-tert-butyl-4-hydroxyphenyl)-propionsäure, Ester von β-(5-tert-Butyl-4-hydroxy-3-methylphenyl)-propionsäure, Ester von β-(3,5-Dicyclohexyl-4-hydroxyphenyl)-propionsäure, Ester von 3,5-Di-tert-butyl-4-hydroxyphenylessigsäure, Amide von β-(3,5-Di-tert-butyl-4-hydroxyphenyl)-propionsäure, geeignete Thiosynergisten, sekundäre Antioxidantien, Phosphite und Phosphonite, Benzofuranone und Indolinone.

Als Thermostabilisator eignen sich bevorzugt Tris-(2,4-di-tert-butylphenyl)phosphit (Irgafos 168), Tetrakis(2,4-di-tert.-butylphenyl)[1,1biphenyl]-4,4'-diylbisphosphonit, Triisoctylphosphat (TOF), Octadecyl-3-(3,5-di-tert butyl-4-hydroxyphenyl)propionat (Irganox 1076), Bis(2,4-dicumyl-phenyl)pentaerythritoldiphosphit (Doverphos S-9228), Bis(2,6-di-tert.butyl-4-methylphenyl)-pentaerythritoldiphosphit (ADK STAB PEP-36) und Triphenylphosphin (TPP). Sie werden allein oder im Gemisch (z. B. Irganox B900 oder Doverphos S-9228 mit Irganox B900 bzw. Irganox 1076 oder Triphenylphosphin (TPP) mit Triisoctylphosphin (TOF)) eingesetzt. Thermostabilisatoren werden vorzugsweise eingesetzt in Mengen von 0,005 Gew.-% bis 2,00 Gew.-%, bevorzugt in Mengen von 0,01 Gew.-% bis 1,0 Gew.-%, besonders bevorzugt in Mengen von 0,015 Gew.-% bis 0,60 Gew.-% und ganz besonders bevorzugt in Mengen von 0,02 Gew.-% bis 0,50 Gew.-%, bezogen auf das Gesamtgewicht der Komponenten A, B, C und D.

Als Komplexierungsmittel für Schwermetalle und zur Neutralisation von Alkalispuren sind o/m Phosphorsäuren, ganz oder teilweise veresterte Phosphate oder Phosphite geeignet.

Als Lichtschutzmittel (UV-Absorber) sind geeignet 2-(2'-Hydroxyphenyl)-benzotriazole, 2-Hydroxybenzophenone, Ester von substituierten und unsubstituierten Benzoesäuren, Acrylate, sterisch gehinderte Amine, Oxamide sowie 2-(Hydroxyphenyl)-1,3,5-triazine bzw. substituierte Hydroxyalkoxyphenyl, 1,3,5-triazole, bevorzugt sind substituierte Benzotriazole wie z.B. 2-(2'-hydroxy-5'-methyl-phenyl)-benzotriazol, 2-(2'-hydroxy-3',5'-di-t-butyl-phenyl)-benzotriazol, 2-(2'-hydroxy-3'-tert.-butyl-5'-methyl-phenyl)-5-**chlorobenzotriazol**, 2-(2'-hydroxy-3',5'-tert.-butyl-phenyl)-5-chlorobenzotriazol, 2-(2'-hydroxy-5'-tert.-octylphenyl)-benzotriazol, 2-(2'-hydroxy-3',5'-di-tert.-amylphenyl)-benzotriazol, 2-[2'-hydroxy-3'-(3",4",5",6"-tetrahydrophthalimido-ethyl)-5'-methylphenyl]-benzotriazol and 2,2'-methylenbis [4-(1,1,3,3-tetramethylbutyl)-6-(2H-benzotriazol-2-yl)-phenol].

Als UV-Stabilisatoren sind weiterhin geeignet ausgewählt aus der Gruppe, die Benzotriazole (z. B. Tinuvine der Fa. BASF), Tinuvin 1600 Fa. BASF, Benzophenone (Uvinule der Fa. BASF), Cyanacrylate (Uvinule der Fa. BASF), Zimtsäureester und Oxalanilide sowie Mischungen dieser UV-Stabilisatoren umfasst.

Die UV-Stabilisatoren werden eingesetzt in Mengen von 0,01 Gew.-% bis 2,0 Gew.-% bezogen auf die Formmasse, bevorzugt in Mengen von 0,05 Gew.-% bis 1,00 Gew.-%, besonders bevorzugt in Mengen von 0,08 Gew.-% bis 0,5 Gew.-% und ganz besonders bevorzugt in Mengen von 0,1 Gew.-% bis 0,4 Gew.-% bezogen auf die Gesamtzusammensetzung.

Polypropylenglykole allein oder in Kombination mit z. B. Sulfonen oder Sulfonamiden als Stabilisatoren können gegen die Schädigung durch Gamma-Strahlen verwendet werden.

Diese und andere Stabilisatoren können einzeln oder in Kombinationen verwendet werden und in den genannten Formen dem Polymer zugesetzt werden.

Geeignete flammhemmende Zusatzstoffe sind Phosphatester, d. h. Triphenylphosphat, Resorcindiphosphorsäureester, bromhaltige Verbindungen, wie bromierte Phosphorsäureester, bromierte Oligocarbonate und Polycarbonate, sowie bevorzugt Salze fluorierter organischer Sulfonsäuren.

Geeignete Schlagzähmacher sind Butadienkautschuk mit aufgepfropftem Styrol-Acrylnitril oder Methylmethacrylat, Ethylen-Propylen-Kautschuke mit aufgepfropftem Maleinsäureanhydrid, Ethyl- und Butylacrylatkautschuke mit aufgepfropftem Methylmethacrylat oder Styrol-Acrylnitril, interpenetrierende Siloxan- und Acrylat-Netzwerke mit aufgepfropftem Methylmethacrylat oder Styrol-Acrylnitril.

Des weiteren können Farbmittel, wie organische Farbstoffe oder Pigmente oder anorganische Pigmente, IR-Absorber, einzeln, im Gemisch oder auch in Kombination mit Stabilisatoren, Glasfasern, Glas(hohl)kugeln, anorganischen Füllstoffen wie beispielsweise Titandioxid oder Bariumsulfat zugesetzt werden.

In einer bevorzugten Ausführungsform enthält die Zusammensetzung als Zusatzstoff (Komponente D) wenigstens ein Entformungsmittel, vorzugsweise Pentaerithrittetrastearat (PETS) und/oder Glycerinmonostearat (GMS), und/oder wenigstens einen Thermostabilisator, vorzugsweise ausgewählt aus der Gruppe bestehend aus Tris-(2,4-di-tert-butylphenyl)phosphit (Irgafos 168), Tetrakis(2,4-di-tert.-butylphenyl)[1,1biphenyl]-4,4'-diylbisphosphonit, Triisoctylphosphat (TOF), Octadecyl-3-(3,5-di-tert butyl-4-hydroxyphenyl)propionat (Irganox 1076), Bis(2,4-dicumyl-phenyl)pentaerythritoldiphosphit (Doverphos S-9228), Bis(2,6-di-tert.butyl-4-methylphenyl)-pentaerythritoldiphosphit (ADK STAB PEP-36) und Triphenylphosphin (TPP). Das Entformungsmittel und der Thermostabilisator können jeweils allein oder im Gemisch (z. B. Irganox B900 oder Doverphos S-9228 mit Irganox B900 bzw. Irganox 1076 oder Triphenylphosphin (TPP) mit Triisoctylphosphin (TOF)) eingesetzt werden. Komponente D kann die genannten Entformungsmittel und Thermostabilisatorsysteme jeweils alleine oder im Gemisch enthalten.

In einer bevorzugten Ausführungsform enthält die Zusammensetzung keine Leitsalze. Leitsalze sind beispielsweise Alkalimetallsalze mit den Anionen Bis(perfluoralkylsulfonyl)amid bzw. -imid wie Bis(trifluormethylsulfonyl)imid, Alkyl- und Aryltosylate, Perfluoralkyltosylate, Nitrat, Sulfat, Hydrogensulfat, Alkyl- und Arylsulfate, Polyethersulfate und -sulfonate, Perfluoralkylsulfate, Sulfonat, Alkyl- und Arylsulfonate, perfluorierte Alkyl- und Arylsulfonate, Alkyl- und Arylcarboxylate, Perfluoralkylcarboxylate, Perchlorat, Tetrachloroaluminat, Saccharinat, Thiocyanat, Isothiocyanat, Dicyanamid, Tetraphenylborat, Tetrakis(pentafluorphenyl)borat, Tetrafluoroborat, Hexafluorophosphat, Phosphat und Polyetherphosphate.

Die erfindungsgemäßen Zusammensetzungen können beispielsweise hergestellt werden, indem man die jeweiligen Bestandteile in bekannter Weise vermischt und bei Temperaturen von 200°C bis 400°C in üblichen Aggregaten wie Innenknetern, Extrudern und Doppelwellenschnecken schmelzcompoundiert und schmelzextrudiert. Die Vermischung der einzelnen Bestandteile kann sowohl sukzessive als auch simultan erfolgen und zwar sowohl bei etwa 20°C (Raumtemperatur) als auch bei höherer Temperatur. Die erfindungsgemäß eingesetzten Verbindungen können aber auch separat in unterschiedlichen Stadien des Herstellprozesses in die Schmelzepolycarbonat-Formmasse eingebracht werden. So können z.B. das/die ionische(n) Flüssigkeit(en) bereits während oder am Ende der Umesterung von Bisphenolen mit organischen Carbonaten, vor oder während der Bildung von oligomeren Polycarbonaten, oder vor bzw. nach der Polykondensation der SPC-Oligomeren in das Schmelzepolycarbonat eingebracht werden. Wahlweise kann die ionische Flüssigkeit(en) als fertige Mischung auch gemeinsam mit anderen Additiven in das SPC an beliebiger Stelle dosiert werden. Auch eine Umkehrung der obigen Reihenfolge der Dosierung der Komponenten ist möglich.

Die Zugabeform der erfindungsgemäßen Verbindungen ist nicht limitiert. Die erfindungsgemäßen Verbindungen bzw. Mischungen der erfindungsgemäßen Verbindungen können als Konzentrat in Polycarbonatpulver, in Lösung oder als Schmelze der Polymerschmelze zugesetzt werden. Bevorzugt erfolgt die Dosierung der ionischen Flüssigkeit(en) über eine Schmelzedosierpumpe, oder einen Seitenextruder hinter der letzten Polykondensationsstufe. In großtechnischen Ausführungsformen wird besonders bevorzugt ein Seitenextruder mit einem Durchsatz von beispielsweise 200 - 1000 kg Polycarbonat pro Stunde betrieben.

In einer bevorzugten Ausführungsform erfolgt die Dosierung von ionischer Flüssigkeit beispielsweise bei Raumtemperatur in flüssiger Form gemeinsam mit Polycarbonat in den Trichter der Polycarbonat-Aufgabe des Seitenextruders. Die Menge an ionischer Flüssigkeit wird z.B. mit Hilfe einer Membranpumpe oder einer anderen geeigneten Pumpe dosiert. Die Zugabe von ionischer Flüssigkeit oder Mischungen von ionischen Flüssigkeiten erfolgt bevorzugt in flüssiger Form bei einer Temperatur von ca. 80 bis 250°C hinter den Trichter der Polycarbonat-Aufgabe in eine Zone des Extruders, die mit Mischelementen ausgestattet ist. Dabei erfolgt die Entnahme der ionischen Flüssigkeit oder Mischungen von ionischen Flüssigkeiten aus einer Ringleitung, die bevorzugt auf einen Druck von 2-20 bar bevorzugt bei einer Temperatur von 80 - 250 °C gehalten wird. Die zugesetzte Menge kann über ein Regelventil gesteuert werden.

In einer besonders bevorzugten Ausführungsform befindet sich hinter dem Seitenextruder und allen Additiv-Dosierstellen ein statischer Mischer, um eine gute Durchmischung aller Additive zu gewährleisten. Die Polycarbonat-Schmelze des Seitenextruders wird dann in den Polycarbonat-Hauptschmelzestrom eingetragen. Die Vermischung des Hauptschmelzestroms mit dem Schmelzestrom des Seitenextruders erfolgt über einen weiteren statischen Mischer.

Alternativ zur Flüssigdosierung können die ionischen Flüssigkeiten in Form eines Masterbatches (Konzentrat der Additive in Polycarbonat) über den Trichter der Polycarbonataufgabe des Seitenextruders dosiert werden. Ein solches Masterbatch kann weitere Additive enthalten.

Die ionischen Flüssigkeiten und ggf. weitere Additive können auch nachträglich zum Beispiel durch Compoundierung in das Polycarbonat eingebracht werden.

Die erfindungsgemäßen Formmassen können zur Herstellung von Formkörpern jeder Art verwendet werden. Diese können beispielsweise durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele der erfindungsgemäßen Formkörper sind Profile, Folien, Gehäuseteile jeder Art, z.B. für Haushaltsgeräte wie Saftpressen, Kaffeemaschinen, Mixer; für Büromaschinen wie Monitore, Drucker, Kopierer; für Platten, Rohre, Elektroinstallationskanäle, Fenster, Türen und Profile für den Bausektor, Innenausbau und Außenanwendungen; auf dem Gebiet der Elektrotechnik z.B. für Schalter und Stecker. Ferner können die erfindungsgemäßen Formkörper für Innenaus- und Bauteile von Schienenfahrzeugen, Schiffen, Flugzeugen, Bussen und anderen Kraftfahrzeugen sowie für Kfz-Karosserieteile verwendet werden.

Die erfindungsgemäßen Formkörper können transparent, transluzent oder opak sein.

Die folgenden Beispiele dienen der weiteren Erläuterung der Erfindung und sind nicht als Einschränkung zu sehen.

### Beispiele

### Oberflächenwiderstand und Durchgangswiderstand

Die Bestimmung der elektrischen Eigenschaften der erfindungsgemäßen Formmassen geschieht durch Messung des sogenannten spezifischen Oberflächenwiderstandes (DIN IEC 60093) und des spezifischen Durchgangswiderstandes (VDE 0303 Teil 30) an Normprüfkörpern (80 x 2 mm), die aus den (Co)polyarbonat-Zusammensetzungen bei einer Massetemperatur von 300 °C und einer Werkzeugtemperatur von 90 °C hergestellt wurden.

MVR

Die Bestimmung der Schmelze-Volumenfließrate (MVR) erfolgt bei 300°C und 1,2 kg Belastung mit einem Schmelzindexprüfgerät nach ISO 1133. Der IMVR Wert entspricht dem MVR Wert, jedoch nach einer thermischen Belastung von 20 min unter den angegebenen Bedingungen.

### Herstellung der erfindungsgemäßen Zusammensetzungen

Die erfindungsgemäßen Compounds wurden auf einem Extruder ZE 25 der Fa. Baersdorf, mit einem Durchsatz von 10 kg/Std. hergestellt. Die Schmelzetemperatur betrug 275 °C. Das Additiv wurden dem Polycarbonatpulver (PC-B, s.u. verwendete Rohstoffe) beigemischt und diese Mischung dem Polycarbonat PC-A zudosiert.

### Verwendete Rohstoffe:

**PC-A** ist ein lineares, thermostabilisiertes Polycarbonat der Bayer MaterialScience AG, Leverkusen, auf Basis von Bisphenol-A mit einer Schmelzevolumenrate MVR von 12,5 cm³/10 min (gemessen in Anlehnung an DIN EN ISO 1133 bei 1,2 kg Beladung und 300°C) in Granulatform.
**PC-B** ist ein lineares Polycarbonat der Bayer MaterialScience AG, Leverkusen ohne Additive auf Basis von Bisphenol A mit einem MVR von 6 cm³/10 min (gemessen in Anlehnung an DIN EN ISO 1133 bei 1,2 kg Beladung und 300°C) in Pulverform.
**IL-AP3**^{®} ist eine kommerziell erhältliche ionische Flüssigkeit der Koei Chemical Company Ltd, basierend auf einem Phosphoniumsalz mit einer Glastemperatur von -78,5 °C und einem Schmelzpunkt von 18°C, sowie einer Viskosität von 338 mPa.s bei 25°C. Der Brechungsindex beträgt 1.446.
**Ruß:** Ketjenblack EC 600 JD^{®} der Firma Akzo Nobel.
**MB IL:** Zusammensetzung eines Masterbatches, welcher durch Compoundierung auf einem Zweiwellenextruder hergestellt wurde (Angaben in Gew.-%).

| **Masterbatch** | **MB IL-AP3** |
|---|---|
| PC-B | 90 |
| IL-AP3 | 10 |

**Tabelle 1:**

| | Vergleichsbeispiele | | | | | Erfindungsgemäße Beispiele | | |
|---|---|---|---|---|---|---|---|---|
| | 1 | 2 | 3 | 4 | 5 | 6 | 7 | 8 |
| Gew.% | | | | | | | | |
| PC-A | 85,0 | 65,0 | 51,7 | 35,0 | 85,0 | 65,0 | 51,7 | 35,0 |
| PC-B | 15,0 | 15,0 | 15,0 | 15,0 | 13,0 | 13,0 | 13,0 | 13,0 |
| MB IL-AP3 | - | 20,0 | 33,3 | 50,0 | - | 20,0 | 33,3 | 50,0 |
| Ruß | - | - | - | - | 2,0 | 2,0 | 2,0 | 2,0 |

| Prüfungen | | | | | | | | |
|---|---|---|---|---|---|---|---|---|
| MVR 300°C/1,2 kg (ml/10 min) | 11,6 | 11,4 | 10,8 | 10,6 | 11,0 | 10,7 | 10,3 | 10,7 |
| IMVR 20` 300°C/1,2 kg (mL/10 min) | 12,0 | 11,4 | 11,0 | 11,0 | 11,1 | 10,9 | 10,6 | 11,4 |
| Δ MVR/IMVR 20' | 0,4 | 0,0 | 0,2 | 0,4 | 0,1 | 0,2 | 0,3 | 0,7 |
| Oberflächenwiderstand (Ω) | 1,10E+17 | 1,30E+13 | 5,70E+11 | 2,70E+11 | 7,00E+16 | 7,20E+11 | 1,60E+11 | 6,20E+10 |
| Durchgangswiderstand (Ωm) | 1,70E+15 | 8,60E+14 | 3,80E+14 | 2,80E+14 | 2,40E+15 | 6,40E+14 | 4,30E+14 | 3,70E+14 |

**Tabelle 2:**

| | Vergleichsbeispiel | Erfindungsgemäße Beispiele | | |
|---|---|---|---|---|
| | 9 | 10 | 11 | 12 |
| Gew.% | | | | |
| PC-A | 85,0 | 65,0 | 51,7 | 35,0 |
| PC-B | 11,0 | 11,0 | 11,0 | 11,0 |
| MB IL-AP3 | - | 20,0 | 33,3 | 50,0 |
| Ruß | 4,0 | 4,0 | 4,0 | 4,0 |

| Prüfungen | | | | |
|---|---|---|---|---|
| MVR 300°C/1,2 kg | 10,6 | 9,9 | 9,9 | 9,7 |
| (ml/10 min) | | | | |
| IMVR 20' 300°C/1,2 kg (mL/ 10 min) | 10,5 | 10,2 | 10,3 | 10,1 |
| Δ MVR/IMVR 20' | -0,1 | 0,3 | 0,4 | 0,4 |
| | | | | |
| Oberflächenwiderstand (Ω) | 6,50E+16 | 6,90E+11 | 2,40E+11 | 7,30E+10 |
| Durchgangswiderstand (Ωm) | 1,80E+15 | 6,00E+14 | 4,30E+14 | 3,20E+14 |

Wie die erfindungsgemäßen Beispiele 6 bis 8 sowie 10 bis 12 zeigen, wird durch den Einsatz von Mischungen bestehend aus der ionischen Flüssigkeit und Ruß ein synergistischer Effekt erreicht.

Compounds enthaltend die ionische Flüssigkeit IL AP-3 und Ruß besitzen gegenüber den Blindproben (Vergleichsbeispiele 1 bis 5 sowie 9) signifikant reduzierte Oberflächen- und Durchgangswiderstände. Gleichzeitig wird die für die Verarbeitung notwendige Schmelzestabilität nicht negativ beeinflusst.

## Patentansprüche

1. Zusammensetzung enthaltend
A) wenigstens ein aromatisches Polycarbonat oder Copolycarbonat,
B) 0,05 bis 10 Gew.% einer phosphor-haltigen ionischen Flüssigkeit der Formel (I) 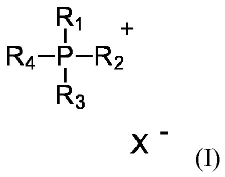 wobei R₁ bis R₄ jeweils unabhängig voneinander für einen Alkyl- oder Arylrest stehen und X⁻ für ein organisches oder anorganisches, ein- oder multivalentes Anion steht,
C) 0,05 bis 10 Gew.% Ruß; und
D) wenigstens einen Zusatzstoff;
wobei sich die Gew.%-Angaben jeweils auf das Gesamtgewicht der Komponenten A, B, C und D beziehen.

2. Zusammensetzung gemäß Anspruch 1, welche die phosphor-haltige ionische Flüssigkeit der Formel (I) in einer Menge von 0,15 bis 6 Gew.% (bezogen auf das Gesamtgewicht der Komponenten A, B, C und D) enthält.

3. Zusammensetzung gemäß Anspruch 1 oder 2, welche den Ruß in einer Menge von 1 bis 5 Gew.% (bezogen auf das Gesamtgewicht der Komponenten A, B, C und D) aufweist.

4. Zusammensetzung gemäß einem der Ansprüche 1 bis 3, **dadurch gekennzeichnet, dass** die Zusammensetzung keine Leitsalze enthält.

5. Zusammensetzung gemäß einem der Ansprüche 1 bis 4, **dadurch gekennzeichnet, dass** sie 0,001 bis 5 Gew.% Zusatzstoff(e) (Komponente D) enthält.

6. Zusammensetzung gemäß einem der Ansprüche 1 bis 5, **dadurch gekennzeichnet, dass** sie wenigstens einen Thermostabilisator und/oder wenigstens ein Entformungsmittel als Zusatzstoff (Komponente D) enthält.

7. Zusammensetzung gemäß Anspruch 6, **dadurch gekennzeichnet, dass** sie als Entformungsmittel Pentaerithrittetrastearat (PETS) und/oder Glycerinmonostearat (GMS) enthält.

8. Zusammensetzung gemäß Anspruch 6 oder 7, **dadurch gekennzeichnet, dass** sie wenigstens einen Thermostabilisator ausgewählt aus der Gruppe bestehend aus Tris-(2,4-di-tert-butylphenyl)phosphit, Tetrakis(2,4-di-tert.-butylphenyl)[1,1biphenyl]-4,4'-diylbis-phosphonit, Triisoctylphosphat, Octadecyl-3-(3,5-di-tert butyl-4-hydroxyphenyl)propionat, Bis(2,4-dicumylphenyl)pentaerythritoldiphosphit, Bis(2,6-di-tert.butyl-4-methylphenyl)-pentaerythritoldiphosphit und Triphenylphosphin aufweist.

9. Zusammensetzung gemäß einem der Ansprüche 1 bis 8, **dadurch gekennzeichnet, dass** sie als Komponente A wenigstens ein Polycarbonat auf Basis von Bisphenol A enthält.

10. Formkörper enthaltend eine Zusammensetzung nach einem der Ansprüche 1 bis 9.

11. Verwendung einer Zusammensetzung gemäß einem der Ansprüche 1-9 zur Herstellung von Blends sowie daraus hergestellten Formkörpern.
